# DEMANDE DE BREVET EUROPEEN

(11) **EP 1 795 547 A1**
(43) Date de publication de la demande: **13.06.2007**
(21) Numéro de dépôt: 06126876.9
(22) Date de dépôt: 09.07.1998
(51) Int. Cl.: C08G 14/08, C03C 25/34

(54) **Resine phenolique pour composition d'encollage, procede de preparation et composition d'encollage la contenant**

(30) Priorité: 15.07.1997 FR 9708936
(62) Demande divisionnaire de: 98937593.6
(71) Demandeur: ISOVER SAINT-GOBAIN, 92400 Courbevoie (FR)
(72) Inventeur: Lericque, Bernard, 60290, RANTIGNY (FR); Tetart, Serge, 60740, SAINT-MAXIMIN (FR); Labbe, Claire, 60140, RANTIGNY (FR); Espiard, Philippe, 60270, GOUVIEUX (FR)
(74) Mandataire: Jamet, Vincent

(57) **Abrégé**

L'invention concerne une composition résinique à base d'un résol phénol-formaldéhyde modifié par de l'urée ayant un rapport molaire formaldéhyde/phénol de 2 à 5, présentant un taux de formaldéhyde libre inférieur ou égal à 3 % (en poids par rapport au poids total de la composition), un taux de phénol libre inférieur ou égal à 0,5 % et une diluabilité mesurée à 20°C au moins égale à 1000 %, ainsi qu'un procédé de préparation de cette composition. Cette composition est caractérisée en ce qu'elle renferme un résol surcondensé obtenu par condensation en milieu basique de phénol, de formaldéhyde et éventuellement d'urée, jusqu'à ce que le produit ait une diluabilité à l'eau à pH 9 inférieure ou égale à 2000 %.

Application à des compositions d'encollage pour produits à base de laine minérale avec une réduction de pollution atmosphérique à l'utilisation de l'encollage.

## Description

La présente invention est relative à une résine phénolique, destinée notamment à être utilisée dans une composition d'encollage pour matériau à base de laine minérale, notamment de produits isolants sous forme de feutre ou de voile.

La fabrication de produits à base de laine minérale comprend une première étape de fabrication de la laine elle-même, notamment par la technique connue de l'étirage centrifuge dans laquelle la matière minérale fondue est transformée en filaments, et une étape de mise en forme dans laquelle les filaments sont étirés et entraînés vers un organe récepteur par un courant gazeux ayant une vitesse et une température élevées, pour y former une nappe. Pour assurer la cohésion de la nappe, on projette sur la laine lors de son trajet vers l'organe récepteur, une composition, dite d'encollage, qui contient une résine thermodurcissable. La nappe ainsi traitée est ensuite soumise à un traitement thermique en étuve pour polycondenser la résine et obtenir un produit présentant des propriétés désirées, telles que stabilité dimensionnelle, résistance à la traction, reprise d'épaisseur après compression, couleur homogène.

Les compositions d'encollage sont généralement pulvérisées sur la laine minérale et sont préparées sous forme de composition aqueuse (solution, dispersion). Cette composition est en général préparée peu de temps avant pulvérisation, sur le site de production même, par addition des constituants usuels : un catalyseur de durcissement tel que du sulfate d'ammonium, de l'urée, et des adjuvants éventuels tels que huiles minérales lubrifiantes en tant qu'agent anti-poussière, ammoniaque, silanes en tant que promoteur d'adhérence, silicone en tant qu'hydrofugeant.

L'aptitude à la pulvérisation de telles compositions est conditionnée par la diluabilité à l'eau de la résine, que l'on définit généralement de la façon suivante : la diluabilité à l'eau d'une résine sous forme de composition aqueuse (résol) est le volume d'eau désionisée que l'on peut, à une température donnée, ajouter à l'unité de volume de cette composition avant de provoquer la formation d'un trouble permanent. La diluabilité à l'eau d'une résine apte à être utilisée dans une composition d'encollage pulvérisable est avantageusement de l'ordre d'au moins 1000 % à 20°C, c'est-à-dire que l'on peut diluer 10 ml de résine avec 10 x 10 ml d'eau ou plus sans que le mélange ne se trouble.

Il est souhaitable en outre que la résine soit stable au stockage pour permettre une utilisation au dernier moment : la diluabilité doit donc rester élevée pendant une période aussi longue que possible. Avantageusement, une résine présentera une diluabilité à l'eau, à 20°C, égale ou supérieure à 1000 % pendant au moins 8 jours.

La résine thermodurcissable utilisée est généralement un résol phénolique obtenu par condensation de phénol et de formaldéhyde, ou équivalents, en présence d'un catalyseur basique. Pour satisfaire l'exigence d'une forte diluabilité à l'eau, on limite le degré de condensation des monomères, pour éviter la formation de chaînes moléculaires longues, peu hydrophiles, qui réduisent la diluabilité.

A cet égard, on a coutume de terminer la réaction de condensation à un degré d'avancement où les chaînes moléculaires ne sont pas très longues, en procédant à la neutralisation du milieu réactionnel à un pH de l'ordre de 7 à 8 avec un acide fort tel que l'acide sulfurique, qui a pour effet de désactiver la catalyse basique. Le résol contient alors une certaine proportion de produits de départ, phénol et formaldéhyde, qui n'ont pas réagi.

D'autre part, pour limiter les risques de pollution atmosphérique lors de la mise en oeuvre de la composition d'encollage, il est souhaitable que la composition utilisée soit aussi exempte que possible de composés organiques volatils tels que les produits de départs non transformés, phénol et formaldéhyde libres, ou d'autres produits susceptibles de se former lors de la condensation des monomères, et qu'elle génère le moins possible de sous-produits polluants lors de la pulvérisation sur les filaments de température élevée et/ou du passage en étuve. Il serait possible en théorie de réduire la teneur en monomères, en particulier phénol libre et surtout en dérivés phénoliques volatils, en augmentant la durée et le degré de condensation des résines, mais on perdrait alors en diluabilité de la résine.

Le problème à la base de l'invention consiste à satisfaire au mieux ces deux exigences contradictoires.

Pour réduire le taux de phénol libre dans la résine, on propose généralement de préparer le résol phénolique en faisant réagir du phénol avec du formaldéhyde dans un rapport molaire formaldéhyde/phénol supérieur à 1 qui favorise la consommation du phénol, et d'ajouter ensuite de l'urée qui réagit avec l'excès de formaldéhyde. On obtient ainsi des résines formées de condensats formaldéhyde/phénol et urée/formaldéhyde. La résine peut être neutralisée avant ou après l'ajout d'urée, avec pour effet supplémentaire de déplacer l'équilibre de la réaction réversible entre l'urée et le formaldéhyde vers la formation du produit de condensation. On préfère généralement neutraliser la résine à un pH voisin de 7 pour éviter le relarguage de produits de départ polluants.

Le document EP-A-0 148 050 décrit la préparation selon cette technique de résines ayant une diluabilité à l'eau au moins égale à 1000 % et ayant une teneur en phénol libre (en poids par rapport au poids total de résine liquide) inférieure ou égale à 0,5 % et une teneur en formaldéhyde libre (en poids par rapport au poids total de résine liquide) inférieure ou égale à 3 %.

Dans le cas idéal, toute l'urée devrait être ajoutée au résol au moment de la fabrication de la résine pour simplifier la préparation sur site de la composition d'encollage. Toutefois, la modification du résol par l'urée peut conduire à un prédurcissement partiel de l'encollage et à des difficultés de manipulation en aval. C'est pourquoi on ne modifie que partiellement le résol qui contient toujours une certaine proportion de formaldéhyde, et on ajoute encore de l'urée à la composition d'encollage. Ces compositions d'encollage doivent néanmoins être utilisées assez rapidement car leur durée de conservation est relativement limitée.

EP-A-0 512 908 présente un moyen pour réduire le prédurcissement et augmenter la durée de conservation avant emploi d'un encollage préparé à partir d'un résol modifié de ce type. Il consiste à faire réagir le résol neutralisé avec deux réactifs azotés, à savoir de l'ammoniaque et de l'urée.

D'autres modifications des résines visant à améliorer d'autres propriétés de l'encollage sont également connues de l'art antérieur.

Ainsi, US-A-4 176 105 s'intéresse à la préparation d'un liant pour fibres minérales à base d'un résol phénolique de résistance thermique améliorée, capable de supporter une opération de durcissement thermique sans être sujet à la décomposition exothermique sans flamme (connue sous le terme anglais de « punking ») qui est ordinairement responsable de défauts de couleur des produits à base de fibres minérales. Il propose de préparer un prépolymère phénolique modifié de bas poids moléculaire en trois étapes consistant à combiner un condensat phénol-formaldéhyde de faible poids moléculaire consistant essentiellement en poly-hydroxyméthyl phénols, avec un composé du bore hydrosoluble tel que l'acide borique jusqu'à un pH acide de l'ordre de 2, puis à ajuster le pH du mélange à une valeur de l'ordre de 7 à 9 avec une base telle que l'hydroxyde d'ammonium, et enfin à ajouter un composé azoté difonctionnel tel que l'urée.

US-A-5 032 431 divulgue l'utilisation d'un borate hydrosoluble pour améliorer la résistance à l'humidité de compositions à base de résine phénolique durcies en milieu alcalin utilisées dans la fabrication de matériaux isolants de couleur foncée à base de fibre de verre. Le borate, tel que du métaborate de lithium, de sodium ou de potassium, peut être simplement ajouté au résol phénolique alcalin de pH supérieur à 8,5 ou bien être fabriqué in situ par réaction d'acide borique avec l'hydroxyde alcalin adéquat en quantité suffisante pour que le pH de la composition reste supérieur à 8,5.

Si les résines et compositions d'encollage préparées de la façon exposée ci-dessus offrent un compromis assez satisfaisant entre la teneur en phénol et formaldéhyde libres et la diluabilité, il est toujours souhaitable d'améliorer ces performances. Le but de l'invention est de fournir une résine pour composition d'encollage qui présente une très faible teneur en composés organique volatils polluants, non seulement phénol et formaldéhyde, mais aussi dérivés organiques volatils tels que monométhylolphénols, qui soit diluable et de préférence stable au stockage pendant une durée au moins égale à celle des résines actuellement connues, et qui soit en outre de préparation aisée.

La présente invention repose sur la découverte inattendue qu'il est possible de préparer une composition résinique diluable et stable à partir d'un résol phénolique fortement condensé, dont la diluabilité en milieu basique peut être relativement faible, et qui précipite en général en milieu acide sulfurique. L'invention permet par conséquent de préparer des résines phénoliques peu polluantes par la voie consistant à pousser la réaction de condensation vers des produits de poids moléculaire élevé, en résolvant le problème de mise en oeuvre de la résine sur ligne de fabrication.

A cet égard l'invention a pour premier objet une composition résinique à base d'un résol phénol-formaldéhyde modifié par de l'urée ayant un rapport molaire formaldéhyde/phénol de l'ordre de 2 à 5, présentant un taux de formaldéhyde libre inférieur ou égal à 3 % (en poids par rapport au poids total de la composition), un taux de phénol libre inférieur ou égal à 0,5 % et une diluabilité mesurée à 20°C au moins égale à 1000 %, caractérisée en ce qu'elle renferme un résol surcondensé obtenu par condensation en milieu basique de phénol, de formaldéhyde et éventuellement d'urée jusqu'à ce que le produit de condensation ait une diluabilité à l'eau à pH 9 inférieure ou égale à 2000 %, ou le produit de neutralisation d'un tel résol.

L'invention permet avantageusement de fournir des compositions résiniques stables, présentant une diluabilité à l'eau à 20°C supérieure ou égale à 1000 % pendant au moins 3 semaines de stockage à 12°C, même lorsqu'elles renferment un produit de neutralisation du résol surcondensé.

Dans la présente invention, les résols phénol-formaldéhyde peuvent être modifiés par l'urée de la façon connue, par réaction à chaud notamment comme décrit dans EP-A-0 148 050, ou à froid après une éventuelle période de repos à température ambiante du produit de condensation phénol-formaldéhyde.

Dans la présente description, le terme « résol surcondensé » désigne un résol caractérisé, à la fin de l'étape de condensation phénol-formaldéhyde et éventuellement urée, par une proportion relativement élevée de gros oligomères contenant au moins trois noyaux intercondensés, et par un poids moléculaire moyen élevé, par exemple mais de façon non limitative supérieur ou égal à 500. Ce résol est obtenu en augmentant la durée et/ou la température de réaction par rapport aux résines classiques, donc le degré de condensation, de façon à assurer une conversion quasi quantitative du phénol initial en dépassant le stade de la monocondensation en monométhylolphénols. Il contient donc une proportion très faible de phénol libre et composés phénoliques volatils susceptibles de polluer l'atmosphère du site d'utilisation.

La forte proportion d'espèces de haut poids moléculaire relativement hydrophobes dans le résol se traduit par une diluabilité relativement faible de la résine.

Le caractère surcondensé des résols utilisables selon l'invention est exprimé par la diluabilité du mélange basique (à pH environ 9) en fin de réaction entre phénol, formaldéhyde et éventuellement urée, qui est inférieure ou égale à 2000 %, pour un mélange réactionnel dont l'extrait sec est notamment de l'ordre de 40 à 60% en poids.

L'invention utilise avantageusement des résols très fortement condensés de diluabilité inférieure ou égale à 1500 %, ou encore à 1000 %, notamment de l'ordre de 400 à 900 %.

Avantageusement, l'invention permet d'atteindre un taux de phénol libre inférieur ou égal à 0,2 %, et même de 0,1 % ou moins.

En général, un résol surcondensé a une diluabilité très faible notamment inférieure à 500 %, voire nulle, lorsqu'il est neutralisé par l'acide sulfurique. On peut observer une précipitation dès que le pH atteint une valeur de l'ordre de 8 à 8,5.

Il peut néanmoins être souhaitable d'utiliser le résol sous forme neutralisée dans la composition résinique, en particulier pour éviter que les condensats uréeformaldéhyde ne relarguent les monomères libres.

Dans une première variante, l'invention propose de neutraliser le résol avec de l'acide borique ou un borate équivalent, notamment borate d'ammonium, métaborate de sodium, tétraborate de sodium, polyborates d'aminoalcool... Il a en effet été découvert par les inventeurs que, de façon surprenante, l'acide borique, utilisé comme agent neutralisant d'un résol phénolique surcondensé modifie le résol de telle façon que sa diluabilité est plus élevée dans le milieu neutralisé ainsi obtenu que dans un milieu obtenu avec de l'acide sulfurique. Le produit de neutralisation par l'acide borique d'un tel résol a en général une diluabilité à 20°C au moins égale à 1000 %, très souvent de l'ordre de 2000 % ou plus.

Sans vouloir être lié par une quelconque théorie scientifique, on suppose que l'acide borique forme avec les condensats phénol-formaldéhyde des complexes borates polaires qui impartissent aux chaînes moléculaires un caractère hydrophile fort favorisant la solubilité en milieu aqueux.

Dans un mode de réalisation préféré, la composition résinique à base de résol neutralisé à l'acide borique est sensiblement neutre, avec un pH de l'ordre de 7 à 8.

Toutefois, elle peut aussi être basique, avec un pH par exemple de l'ordre de 8 à 10, notamment de 8,5 à 10, lorsque la neutralisation du résol est effectuée avec de l'acide borique en solution alcaline, notamment ammoniacale. De façon surprenante, on a constaté que le résol fortement condensé modifié par l'acide borique est stable en milieu basique.

Toutes ces compositions, quel que soit leur pH, renfermant un produit de neutralisation par l'acide borique, présentent une diluabilité à l'eau à 20°C supérieure ou égale à 1000 % pendant au moins 3 semaines de stockage à 12°C.

Dans une deuxième variante, l'invention propose de neutraliser le résol avec de l'acide sulfamique ou un sulfamate équivalent. Il a également été découvert par les inventeurs de façon surprenante que l'acide sulfamique, utilisé comme agent neutralisant d'un résol phénolique surcondensé modifie le résol de telle façon que sa diluabilité est plus élevée dans le milieu neutralisé ainsi obtenu que dans le milieu obtenu avec l'acide sulfurique. Le produit de neutralisation par l'acide sulfamique d'un tel résol a en général une diluabilité à 20°C au moins égale à 1000 %, très souvent de l'ordre de 2000 % ou plus.

La composition résinique à base de résol neutralisé à l'acide sulfamique est en général sensiblement neutre, avec un pH de l'ordre de 7 à 8.

Elle présente une diluabilité à l'eau à 20°C supérieure ou égale à 1000 % pendant au moins 3 semaines de stockage à 12°C.

Dans une autre variante, la composition résinique renferme un produit de neutralisation avec un acide quelconque mais renferme également un émulsifiant tel qu'une gomme et/ou un tensioactif anionique, notamment les gommes guar et ghatti, ou éventuellement de la caséine.

De préférence, lorsque l'on utilise les acides forts courants, le produit de neutralisation du résol est obtenu en présence de l'émulsifiant.

L'acide utilisé peut être choisi parmi tous les acides forts connus en soi tels que l'acide sulfurique, l'acide chlorhydrique, mais aussi l'acide borique ou un borate, l'acide sulfamique ou un sulfamate.

La composition a avantageusement un pH de l'ordre de 7 à 8, notamment 7,2 à 7,6.

Elle se présente sous la forme d'une émulsion. La quantité d'émulsifiant utilisée dépend de sa nature et est déterminée aisément par l'homme du métier. A titre indicatif, cette quantité peut être de 1 à 10 parties en poids d'émulsifiant pour 100 parties en poids de matière sèche dans le résol.

Comme dans les variantes précédentes, une telle composition est stable et garde une diluabilité mesurée à 20 °C d'au moins 1000 % après 3 semaines de stockage à 12 °C.

Dans un autre mode de réalisation, on ne neutralise pas le résol juste après sa préparation. En effet, comme on cherche à atteindre un degré de condensation le plus élevé possible, pour limiter les émissions de polluants, il n'y a pas un besoin absolu de désactiver rapidement le catalyseur basique. Dans ce mode de réalisation, la composition résinique selon l'invention renferme un résol phénol-formaldéhyde-urée non neutralisé. Le pH d'une telle composition est généralement de l'ordre de 8,5 à 10.

L'invention a donc en particulier pour objet une composition résinique renfermant un résol surcondensé dont la diluabilité à pH 9 est inférieure ou égale à 2000 %, notamment de l'ordre de 1000 à 2000%, non neutralisé pour mélange extemporané avec un réactif de neutralisation.

Cette composition est stable au stockage et utilisable en tant que prémélange pouvant être complété au dernier moment sur le site d'utilisation par mélange extemporané avec les ingrédients nécessaires à la formulation de l'encollage.

Parmi ces ingrédients, on ajoutera notamment un réactif de neutralisation, car il est bien sûr toujours souhaitable dans un but anti-pollution que la résine au moment de l'application de l'encollage et/ou du passage en étuve soit sous forme neutralisée.

Ce réactif de neutralisation peut être choisi avantageusement parmi l'acide borique ou un borate équivalent, l'acide sulfamique ou un sulfamate équivalent, et un système comprenant un émulsifiant et un acide, comme décrit précédemment.

En variante, la composition résinique selon l'invention peut contenir un réactif neutralisant précurseur d'acide agissant de façon retardée, notamment sous activation thermique. Ainsi, par exemple, le sulfate d'ammonium ou le sulfate d'aluminium ajouté à la composition résinique à température ambiante ne modifie pas le pH de cette dernière, mais libère de l'acide sulfurique à température élevée. La quantité de sulfate d'ammonium dans la composition est déterminée de façon à apporter une quantité d'équivalents H₂SO₄ suffisante pour neutraliser le catalyseur basique contenu dans le résol.

Dans le cas particulier où le résol phénol-formaldéhyde-urée est pulvérisable à l'état non neutralisé, notamment avec une diluabilité à pH 9 de l'ordre de 1000 à 2000 % environ, voire moins mais plus généralement de 1500 à 2000 % environ, le réactif de neutralisation peut être ajouté au stade de la pulvérisation, sous forme d'un jet de solution ou dispersion aqueuse pulvérisé au niveau de la couronne d'encollage. L'utilisation d'un réactif neutralisant précurseur d'acide susceptible d'agir de façon retardée, notamment sous activation thermique, se prête également à cette variante, l'activation thermique pouvant par exemple avoir lieu quand la composition d'encollage est appliquée sur les filaments chauds de matière minérale ou lors du passage en étuve de la nappe.

A cet égard, l'invention a pour objet un procédé de fabrication d'un produit à base de laine minérale, dans lequel on fabrique la laine minérale, on pulvérise sur la laine une composition d'encollage, on collecte la laine encollée sous forme d'une nappe, et l'on soumet la nappe à un traitement thermique, caractérisé en ce que la composition d'encollage comprend une composition résinique renfermant un réactif neutralisant à activation thermique.

Elle a aussi pour objet un procédé de fabrication d'un produit à base de laine minérale, dans lequel on fabrique la laine minérale, on pulvérise sur la laine une composition d'encollage, on collecte la laine encollée sous forme d'une nappe, et l'on soumet la nappe à un traitement thermique, caractérisé en ce que la composition d'encollage comprend une composition résinique renfermant un résol non neutralisé et en ce que l'on pulvérise également sur la laine minérale un agent neutralisant.

L'invention a également pour objet un procédé de préparation d'une composition résinique telle que ci-dessus. Ce procédé comprend une étape caractéristique de surcondensation consistant à faire réagir en milieu basique du phénol, du formaldéhyde et éventuellement de l'urée jusqu'à ce que le produit ait une diluabilité à l'eau à pH 9 inférieure ou égale à 2000 %, notamment 1500 %, voire 1000 %, suivie d'une étape de neutralisation.

Le pH initial (avant neutralisation) du résol obtenu en milieu basique est généralement de l'ordre de 8,5 à 10, notamment de 9 à 9,5.

Dans l'étape de surcondensation, on fait réagir du phénol et du formaldéhyde en présence d'un catalyseur basique, le rapport formaldéhyde/phénol étant de l'ordre de 2 à 5, de préférence de 2,5 à 4, notamment de 2,8 à 3,6. Le catalyseur basique connu en soi, notamment la soude, la potasse, la chaux ou la baryte, ou un catalyseur amine, est en général utilisé en quantité correspondant à 6 à 20 mol d'équivalents hydroxyle OH⁻ pour 100 mol de phénol initial.

Avantageusement, cette réaction est conduite jusqu'à l'obtention d'un taux de conversion du phénol égal ou supérieur à 98 %, de préférence à 99 %, tout particulièrement de l'ordre d'au moins 99,3 à 99,5 %.

Dans une première variante, on met les monomères en présence avec un catalyseur de polymérisation basique de préférence à une température comprise entre 20 et 60°C environ, et on les amène à une température de réaction comprise entre 50 et 80°C environ, de préférence à 70°C environ, jusqu'au taux de conversion désiré. Avantageusement, on maintient cette température de réaction pendant 100 à 200 minutes, de préférence de 130 à 160 minutes environ. Ce chauffage prolongé permet d'atteindre la surcondensation de la résine avec formation d'espèces de haut poids moléculaire renfermant une plus grande proportion de gros oligomères contenant trois noyaux phénoliques intercondensés et plus. On refroidit ensuite le mélange à une température de 20 à 30°C.

Dans une seconde variante, on met les monomères en présence avec un catalyseur de polymérisation basique de préférence à une température comprise entre 20 et 60°C environ, et on les amène à une première température de réaction comprise entre 50 et 80°C environ, de préférence de 70°C environ, puis on élève la température du mélange à une deuxième température de réaction comprise entre 70 et 90°C, de préférence à 85°C, jusqu'au taux de conversion désiré. Ce deuxième palier de chauffage est destiné à réaliser une surcondensation de la résine avec formation d'espèces de haut poids moléculaire renfermant une plus grande proportion de gros oligomères contenant trois noyaux phénoliques intercondensés et plus.

Avantageusement, la durée de la réaction à la première température est de 50 à 80 minutes, et la durée de la réaction à la deuxième température est de 30 à 60 minutes. On refroidit ensuite le mélange à une température de 20 à 30°C.

De manière générale, un ou plusieurs des monomères de condensation peuvent aussi être introduits de façon continue dans le mélange réactionnel.

La préparation de la composition résinique selon l'invention comprend en outre la modification du résol par de l'urée. Dans un première forme de modification, l'urée est amenée à se condenser avec les monomères du mélange réactionnel à chaud. Avantageusement, l'urée est introduite dans le milieu réactionnel au cours de la phase de refroidissement, notamment dès le début du refroidissement. Elle peut également être ajoutée après refroidissement complet du mélange réactionnel, éventuellement après une certaine période de stockage à température ambiante ou inférieure. Elle peut encore être ajoutée, de préférence à froid, après l'étape de neutralisation.

L'étape de neutralisation peut avoir lieu juste après l'étape de surcondensation (sur le mélange refroidi), ou bien après une étape de stockage pendant une période déterminée suivant l'étape de surcondensation. Elle peut notamment avoir lieu juste avant la formulation de l'encollage.

Elle consiste à ajouter un acide au mélange réactionnel refroidi à température ambiante en quantité suffisante pour abaisser le pH a une valeur de 7 à 8. L'acide est avantageusement introduit à raison de 0,88 à 0,92 mol d'acide par mol d'équivalents hydroxyle OH⁻ apportés par le catalyseur basique.

Dans le cas de l'acide borique, on utilise de préférence l'acide borique en solution aqueuse titrant de préférence de 3 à 20 % en poids d'acide borique. Les solutions à fort titre en acide borique renferment en général une base, telle que l'ammoniaque, destinée à augmenter la solubilité de l'acide borique. La quantité d'acide borique à introduire est toujours calculée pour neutraliser le catalyseur basique, mais le pH final est alors plus élevé, de l'ordre de 8,5 à 10.

Dans le cas de l'acide sulfamique, on utilise avantageusement l'acide sulfamique en solution aqueuse titrant de préférence de 10 à 20 % en poids d'acide sulfamique ou d'un sulfamate. On peut aussi utiliser l'acide sulfamique ou sulfamate sous forme solide à dissoudre dans le résol.

Au terme de la neutralisation à l'acide borique ou sulfamique, le résol voit sa diluabilité à l'eau augmentée par rapport à celle dans le milieu basique initial. Cet effet avantageux n'est du reste pas limité à la neutralisation d'un résol surcondensé, mais peut être observé de manière générale avec toute résine phénolique conventionnelle. Si avec ces résines, il est difficile d'observer l'augmentation de diluabilité lorsqu'on passe du milieu basique au milieu acide, parce que la diluabilité initiale est déjà élevée, la neutralisation à l'acide borique ou sulfamique a pour effet d'augmenter la stabilité dans le temps de la résine. Lorsque le résol est neutralisé par l'un de ces acides, la composition résinique garde plus longtemps un niveau de diluabilité désiré que lorsque le résol est neutralisé par l'acide sulfurique.

A cet égard, l'invention a également pour objet un procédé pour améliorer la diluabilité d'un résol phénolique, notamment d'un résol de diluabilité à l'eau à pH 9 inférieure ou égale à 2000 %, caractérisé en ce qu'il comprend une étape consistant à neutraliser le résol avec de l'acide borique (ou borate équivalent) ou sulfamique (ou sulfamate équivalent).

Dans un autre mode de réalisation, on ajoute à la fois un acide et un émulsifiant au cours de l'étape de neutralisation. De préférence, lorsqu'il s'agit d'un acide fort traditionnel, on ajoute d'abord l'émulsifiant notamment en solution aqueuse, puis l'acide pour réaliser la neutralisation en présence de l'émulsifiant.

Dans encore un autre mode de réalisation, l'étape de neutralisation comprend le mélange du résol avec un réactif neutralisant à activation thermique, et le chauffage du mélange résultant, ce chauffage pouvant avoir lieu lors de la pulvérisation sur les filaments de verre chauds ou du passage en étuve de la nappe.

Les compositions résiniques diluables et stables selon l'invention peuvent être utilisées avantageusement dans une composition d'encollage pour produit à base de laine minérale, peu polluante, ayant en outre une aptitude à la pulvérisation élevée.

L'invention a encore pour objet une composition d'encollage pour produit à base de laine minérale, comprenant une composition résinique telle que décrite ci-dessus, éventuellement de l'urée supplémentaire et éventuellement des additifs d'encollage, les proportions pondérales de la résine et de l'urée étant de préférence de 50:50 à 90:10.

D'une manière générale, une composition typique d'encollage peut comprendre les additifs suivants, pour 100 parties en poids de matière sèche de résine et d'urée :

| | |
|---|---|
| sulfate d'ammonium | 0 à 5, avantageusement 3 |
| silane, notamment aminosilane | 0 à 2 |
| huile minérale | 0 à 20 |
| ammoniaque à 20 % | 0 à 20, avantageusement 3 à 12 |

De l'ammoniaque peut être introduit dans la composition résinique à chaud en cours de synthèse, ou bien à froid en prémélange après condensation, ou bien lors de la formulation de l'encollage, ou encore à plusieurs stades de la fabrication de la composition.

D'autres avantages et particularités de l'invention ressortiront des exemples suivants, non limitatifs.

### EXEMPLE 1

Cet exemple illustre la neutralisation par l'acide borique d'un résol surcondensé.

Dans un réacteur agité et chauffé à 45°C, on introduit 66,2 kg de phénol (703 mol) et 159,7 kg d'une solution aqueuse à 37 % en poids de formaldéhyde. Ceci correspond à un rapport moléculaire formaldéhyde/phénol = 2,8.

Tout en maintenant la température à 45°C, on ajoute en 30 minutes, fraction par fraction, 7,03 kg d'hydroxyde de sodium en solution à 47 % (soit 82,6 mol de NaOH).

A la fin de l'addition de la soude, on augmente la température du mélange à 70°C en 30 minutes. On maintient l'agitation à cette température durant 60 minutes.

On augmente alors la température du mélange à 85°C en 15 minutes et on maintient cette température durant 45 minutes. Ce deuxième palier de chauffage est destiné à réaliser une surcondensation de la résine avec formation d'espèce de haut poids moléculaire renfermant une plus grande proportion de gros oligomères contenant trois noyaux phénoliques intercondensés et plus. Le taux de transformation du phénol à l'issue de cette surcondensation est de 99,3 %.

On commence alors à refroidir le réacteur et on ajoute en même temps 24,6 kg d'urée en grains, sur une durée de 20 minutes. La température est alors de 60°C et on poursuit le refroidissement en 40 minutes jusqu'à 25°C.

Le résol obtenu a un pH de 9,2 et une diluabilité à l'eau à ce pH de 800 %.

On neutralise alors le résol avec 154 kg d'une solution d'acide borique à 3 % dans l'eau (soit 74,8 mol de H₃BO₃).

On obtient finalement un résol de pH 7,2, contenant 30,4 % en poids de matière sèche, moins de 0,5 % en poids de formol libre en poids par rapport au poids total de résol modifié, et 0,1 % de phénol libre. Sa diluabilité est supérieure à 2000 % et le reste après 3 semaines de stockage à 12°C.

Par comparaison, le même résol modifié par l'urée mais neutralisé par l'acide sulfurique à 25 % précipite quand le pH devient inférieur à 8,6.

### EXEMPLE 2

Dans cet exemple on prépare un résol phénolique encore plus condensé en poussant plus loin la deuxième étape de chauffage.

Dans le même type de réacteur agité et chauffé à 45°C, on introduit 54,07 kg de phénol (575 mol) et 162,85 kg d'une solution aqueuse à 37 % en poids de formaldéhyde. Ceci correspond à un rapport moléculaire formaldéhyde/phénol = 3,5.

Tout en maintenant la température à 45°C, on ajoute en 30 minutes, fraction par fraction, 5,76 kg d'hydroxyde de sodium en solution à 47 % (soit 67,7 mol de NaOH).

A la fin de l'addition de la soude, on augmente la température du mélange à 70°C en 30 minutes. On maintient l'agitation à cette température durant 60 minutes.

On augmente alors la température du mélange à 85°C en 15 minutes et on maintient cette température durant 50 minutes. Le taux de transformation du phénol à l'issue de cette surcondensation est de 99,63 %.

On commence alors à refroidir le réacteur et on ajoute en même temps 54,1 kg d'urée en grains, sur une durée de 20 minutes. La température est alors de 60°C et on poursuit le refroidissement en 40 minutes jusqu'à 25°C.

Le résol obtenu a un pH de 9,3 et une diluabilité à l'eau à ce pH de 700 %.

On neutralise alors le résol avec 123,5 kg d'une solution d'acide borique à 3 % dans l'eau (soit 59,9 mol de H₃BO₃).

On obtient finalement un résol de pH 7,2, contenant 34,3 % en poids de matière sèche, moins de 0,5 % en poids de formol libre en poids par rapport au poids total de résol modifié, et 0,05 % de phénol libre. Sa diluabilité est supérieure à 2000 % et le reste après 3 semaines de stockage à 12°C.

Par comparaison, le même résol modifié par l'urée mais neutralisé par l'acide sulfurique à 25 % précipite quand le pH devient inférieur à 8,6.

### EXEMPLE 3

Dans cet exemple, on augmente le degré de condensation de la résine en réalisant un chauffage prolongé des monomères à une seule température.

Dans un réacteur agité et chauffé à 45°C, on introduit 42,37 kg de phénol (451 mol) et 127,29 kg d'une solution aqueuse à 37 % en poids de formaldéhyde. Ceci correspond à un rapport moléculaire formaldéhyde/phénol = 3,5.

Tout en maintenant la température à 45°C, on ajoute en 30 minutes, fraction par fraction, 5,35 kg d'hydroxyde de sodium en solution à 47 % (soit 62,8 mol de NaOH).

A la fin de l'addition de la soude, on augmente la température du mélange à 70°C en 30 minutes. On maintient l'agitation à cette température durant 140 minutes.

Le taux de transformation du phénol à l'issue de cette surcondensation est de 99,44 %.

On commence alors à refroidir le réacteur et on ajoute en même temps 44 kg d'urée en grains, sur une durée de 25 minutes. La température est alors de 45°C et on poursuit le refroidissement en 15 minutes jusqu'à 30°C.

Le résol obtenu a un pH de 9,3 et une diluabilité à l'eau à ce pH de 2000 %.

On neutralise alors le résol à 30°C avec 17,65 kg d'une solution d'acide borique à 20 % en milieu ammoniacal, préparée en ajoutant 3,53 kg d'acide borique pur à 11,76 kg d'eau à 20°C, puis en ajoutant peu à peu 2,36 kg de solution d'ammoniaque à 17 %. La quantité de H₃BO₃ introduite est donc de 57,1 mol, correspondant à la quantité nécessaire pour neutraliser la même quantité de soude initiale en amenant le pH à 7,2 (sans ajout d'ammoniaque).

On refroidit ensuite à 25°C en 15 minutes.

On obtient finalement un résol de pH 8,7, contenant 46,4 % en poids de matière sèche, moins de 0,5 % en poids de formol libre en poids par rapport au poids total de résol modifié, et 0,1 % de phénol libre. Sa diluabilité est supérieure à 2000 % et reste supérieure à 1000 % après 3 semaines de stockage à 12°C.

Par comparaison, le même résol modifié par l'urée mais neutralisé par l'acide sulfurique à 25 % a une diluabilité très faible inférieure à 500 %.

### EXEMPLES D'APPLICATION

Les résols des exemples 1 à 3 sont utilisés pour préparer des compositions d'encollage par dilution avec 6 volumes d'eau et ajout éventuel de silane et d'huile. Les compositions d'encollage sont utilisées pour fabriquer des matelas de laine de verre dans les conditions connues de l'homme de l'art. L'encollage est pulvérisé sur les filaments de verre chauds à raison de 4 % en poids d'encollage par rapport au poids de verre, et la nappe recueillie sur un tapis récepteur est passée en étuve à 280°C. On mesure les émissions de polluants cumulées au niveau du dispositif de réception de la laine encollée et au niveau de l'étuve en prélevant des échantillons des atmosphères correspondantes au moyen de barboteurs. La teneur en phénol de l'échantillon est mesurée par chromatographie en phase gazeuse ; la teneur en phénol total (tous dérivés phénoliques volatils), en formaldéhyde et en ammoniaque est mesurée par colorimétrie ; et la teneur en composés organiques volatils est mesurée au moyen d'un COTmètre. Les résultats, exprimés en kg de polluant par tonne de verre, sont consignés dans le tableau 1 ci-après.

### EXEMPLE COMPARATIF 1

Pour comparaison, on indique aussi dans ce tableau les émissions de polluants avec une résine de l'art antérieur du type phénol-formaldéhyde-urée ayant un rapport formaldéhyde/phénol ≥ 4 et une teneur en phénol libre de 0,15 %. En fin de préparation, la résine modifiée à l'urée a une diluabilité à pH 9 supérieure à 2000 %. L'encollage est préparé et appliqué comme dans les exemples d'application selon l'invention.

**TABLEAU 1**

| | **EX. 1** | **EX. 2** | **EX. 3** | **EX. COMP. 1** |
|---|---|---|---|---|
| phénol libre | 0,21 | 0,04 | 0,14 | 0,15 |
| phénol total | 0,56 | 0,23 | 0,45 | 0,82 |
| formaldéhyde | 0,71 | 0,97 | 0,76 | 0,81 |
| ammoniaque | 0,88 | 1,52 | 1,77 | 1,8 |
| **tous composés organiques volatils** | **2,34** | **2,45** | **2,65** | **3,58** |

Avec les résols des exemples 1 à 3, l'émission totale de composés organiques volatils est réduite d'environ 30 % par rapport à la résine de l'art antérieur. On note en particulier une réduction remarquable de l'émission de dérivés phénoliques volatils (en particulier phénol et monométhylolphénols) et aussi du formaldéhyde, ainsi que de l'ammoniaque.

### EXEMPLE COMPARATIF 2

A des fins de comparaison, on a reproduit l'exemple 1 du document EP-A-148 050, dans lequel la condensation des monomères n'est pas poussée jusqu'au stade de la surcondensation.

On a donc fait réagir du formaldéhyde en solution aqueuse à 37%, avec du phénol dans un rapport molaire de 3,5 à la température de 45°C sous agitation. On a introduit régulièrement en 30 minutes, à 45°C, une solution aqueuse à 50% de soude à raison de 6% en poids du phénol initial, puis on a élevé la température de façon régulière de 45 à 70°C en 30 minutes et on l'a maintenue à 70 °C pendant 71 minutes.

En refroidissant le mélange régulièrement de 70 à 50 °C en 20 minutes, on a introduit de l'urée dans un rapport molaire au phénol de 1,18. On a continué de refroidir à la même vitesse à 35°C.

On a alors neutralisé le résol à l'acide sulfurique pour atteindre un pH de l'ordre de 7,5. La diluabilité du résol ainsi neutralisé est de 2000 %, signe que l'on est loin de l'état de surcondensation.

Comme le montre le tableau 2 suivant, la diluabilité de cette composition s'effondre après 2 semaines de stockage.

**TABLEAU 2**

| Durée de stockage à 12 °C (jours) | Diluabilité à 20°C de la composition résinique | | |
|---|---|---|---|
| | EX. COMP. 2 | EX 3 neutralisation à l'acide borique | Résine de l'ex. 3 neutralisée à l'acide sulfurique |
| 0 | 2000 % | 2000 % | 300 % |
| 4 | 2000 % | 2000 % | 200 % |
| 8 | 1700 % | 1800 % | 100 % |
| 12 | 1400 % | 1700 % | - |
| 18 | 100 % | 1550 % | - |

### EXEMPLE 4

Cet exemple illustre la neutralisation d'un résol surcondensé par l'acide sulfamique.

Dans un réacteur agité et chauffé à 45°C, on introduit 193 kg de phénol et 531 kg d'une solution aqueuse à 37 % en poids de formaldéhyde. Ceci correspond à un rapport moléculaire formaldéhyde/phénol = 2.5.

Tout en maintenant la température à 45°C, on ajoute en 30 minutes, fraction par fraction, 24,2 kg d'hydroxyde de sodium en solution à 48 % .

A la fin de l'addition de la soude, on augmente la température du mélange à 70°C en 30 minutes. On maintient l'agitation à cette température durant 150 minutes.

Après refroidissement à 25°C, le résol obtenu a un pH de 9,1 et une diluabilité à l'eau à ce pH de 2000 %.

On neutralise ce résol en le faisant réagir avec 177 kg d'une solution aqueuse à 15 % d'acide sulfamique. Juste après la fin de l'ajout de l'acide sulfamique, la diluabilité à 20°C du résol neutralisé est de 600 % seulement, mais elle remonte au-dessus de 1000 % après 24 heures à la température ambiante. Il semblerait qu'au cours de ces premières 24 heures l'acide sulfamique continue de réagir avec le résol.

On obtient finalement un résol de pH 7,2, contenant 37,4 % en poids de matière sèche, 4 % en poids de formol libre en poids par rapport au poids total de résol (non modifié), et 0,18 % de phénol libre, dont la diluabilité reste supérieure à 1000 % après 3 semaines de stockage à 12°C.

A partir de ce résol, on peut préparer en fonction des besoins une composition utilisable en tant que prémélange pour formulation d'un encollage. Cette préparation a lieu de préférence environ 24 heures avant la formulation de l'encollage pour utilisation immédiate de ce dernier.

On prépare ce prémélange à température ambiante en ajoutant 40 parties en poids d'urée pour 60 parties en poids de résol neutralisé. A la suite de cette modification à froid par l'urée, la composition résinique contient moins de 0,5 % en poids de formaldéhyde libre.

On utilise ce prémélange pour préparer une composition d'encollage suivant la formulation suivante :

| | |
|---|---|
| prémélange | 100 parties en poids |
| sulfate d'ammonium | 1 |
| ammoniac | 3 |

On mesure, dans les conditions indiquées ci-dessus dans les exemples d'application, les émissions de polluants cumulées sur la ligne de fabrication de matelas de laine de verre (en kg de polluant par tonne de verre) :

| | |
|---|---|
| phénol libre | 0,19 |
| phénol total | 0,86 |
| formaldéhyde | 0,47 |
| ammoniac | 1,9 |
| **COT** | **2,35** |

Cet exemple montre que ce résol libère une quantité très réduite de composés organiques volatils en général.

### EXEMPLE 5

Cet exemple illustre la neutralisation d'un résol surcondensé par l'acide sulfurique en présence d'un émulsifiant.

Dans un réacteur agité et chauffé à 45°C, on introduit 61,9 kg de phénol (658 mol) et 149,6 kg d'une solution aqueuse à 37 % en poids de formaldéhyde. Ceci correspond à un rapport moléculaire formaldéhyde/phénol = 2,8.

Tout en maintenant la température à 45°C, on ajoute en 30 minutes, fraction par fraction, 6,5 kg d'hydroxyde de sodium en solution à 47 % (soit 76,4 mol de NaOH).

A la fin de l'addition de la soude, on augmente la température du mélange à 70°C en 30 minutes. On maintient l'agitation à cette température durant 60 minutes.

On augmente alors la température du mélange à 85°C en 15 minutes et on maintient cette température durant 45 minutes. Le taux de transformation du phénol à l'issue de cette surcondensation est de 99,3 %.

On commence alors à refroidir le réacteur et on ajoute en même temps 16,3 kg d'urée en grains, sur une durée de 30 minutes. La température est alors de 60°C et on poursuit le refroidissement en 40 minutes jusqu'à 25°C.

Le résol obtenu a un pH de 9,3 et une diluabilité à l'eau à ce pH de 800 % (extrait sec : 46,8 %).

On ajoute, sous agitation, 150 kg d'une solution à 2,6 % de gommes dans l'eau (1,3 kg de gomme Guar + 2,6 kg de gomme Ghatti dilués en pluie dans la quantité d'eau nécessaire pour obtenir 2,6 % de matière sèche).

On neutralise la résine à pH 7,2 par addition d'acide sulfurique à 25%, toujours sous agitation.

Il se forme in situ une émulsion stable, qui a une diluabilité d'au moins 1000 % pendant 3 semaines.

### EXEMPLE 6

Cet exemple illustre l'utilisation d'un réactif de neutralisation à action retardée activable thermiquement.

On procède comme à l'exemple 3 pour préparer le résol phénol-formaldéhyde-urée de diluabilité 2000 % à pH 9,3 (extrait sec : 46,4 %). On conserve ce résol basique à 12°C pendant une durée pouvant aller jusqu'à 15 jours.

Pour amener ce résol à pH 7,2, il faudrait ajouter 11,2 kg d'acide sulfurique à 25 % (soit 2,8 kg de H₂SO₄ ou 28,5 mol).

Juste avant la fabrication de l'encollage, on ajoute la quantité de sulfate d'ammonium équivalente en acide sulfurique (28,5 mol, soit 3,76 kg de (NH₄)₂SO₄ , par exemple 18,8 kg de solution de sulfate d'ammonium à 20 %).

On pulvérise immédiatement la solution obtenue, conjointement avec de l'eau de dilution.

Lorsqu'elle est exposée aux fortes températures des filaments de verre d'une part et de l'étuve d'autre part, la solution est le siège d'une réaction dans laquelle 1 mol de sulfate d'ammonium génère 1 mol d'acide sulfurique et 2 mol d'ammoniaque. L'acide sulfurique libéré neutralise le résol in-situ sur les filaments de verre.

## Revendications

1. Composition résinique à base d'un résol phénol-formaldéhyde modifié par de l'urée ayant un rapport formaldéhyde/phénol de 2 à 5, présentant un taux de formaldéhyde libre inférieur ou égal à 3 % (en poids par rapport au poids total de la composition), un taux de phénol libre inférieur ou égal à 0,5 % et une diluabilité mesurée à 20°C au moins égale à 1000 %, **caractérisée en ce qu'**elle renferme un résol surcondensé, c'est-à-dire obtenu par condensation en milieu basique de phénol et de formaldéhyde et éventuellement d'urée jusqu'à ce que le produit ait une diluabilité à l'eau à une température de 20°C inférieure ou égale à 2000 % à pH environ 9, sous une forme non neutralisée.

2. Composition selon la revendication 1, **caractérisée en ce qu'**elle garde une diluabilité à 20°C d'au moins 1000 % après 3 semaines de stockage à 12 °C.

3. Composition selon la revendication 1 ou 2, **caractérisée en ce que** le résol surcondensé est obtenu par condensation de phénol, de formaldéhyde et éventuellement d'urée, jusqu'à ce que le produit ait une diluabilité à l'eau à une température de 20°C inférieure ou égale à 1500 % à pH environ 9, notamment à 1000 %.

4. Composition selon l'une des revendications 1 à 3, **caractérisée en ce qu'**elle a un taux de phénol libre inférieur ou égal à 0,2 %, notamment à 0,1 %.

5. Composition selon l'une des revendications 1 à 4, **caractérisée en ce qu'**elle renferme un résol surcondensé non neutralisé et du sulfate d'ammonium.

6. Composition selon l'une des revendications 1 à 4, **caractérisée en ce qu'**elle comprend un résol surcondensé non neutralisé pour mélange extemporané avec un réactif de neutralisation.

7. Composition d'encollage pour produit à base de laine minérale, comprenant une composition résinique selon l'une des revendications 1 à 6, et éventuellement de l'urée et/ou des additifs d'encollage.

8. Procédé de fabrication d'un produit à base de laine minérale, dans lequel on fabrique la laine minérale, on pulvérise sur la laine une composition d'encollage, on collecte la laine encollée sous forme d'une nappe, et l'on soumet la nappe à un traitement thermique, **caractérisé en ce que** la composition d'encollage comprend une composition résinique selon la revendication 5.

9. Procédé de fabrication d'un produit à base de laine minérale, dans lequel on fabrique la laine minérale, on pulvérise sur la laine une composition d'encollage, on collecte la laine encollée sous forme d'une nappe, et l'on soumet la nappe à un traitement thermique, **caractérisé en ce que** la composition d'encollage comprend une composition résinique selon l'une des revendications 1 à 4 **et en ce que** l'on pulvérise également sur la laine minérale un agent neutralisant.
